# EUROPÄISCHE PATENTSCHRIFT

(11) **EP 0 295 479 B1**
(45) Veröffentlichungstag und Bekanntmachung des Hinweises auf die Patenterteilung: **24.11.1993**
(21) Anmeldenummer: 88108573.2
(22) Anmeldetag: 28.05.1988
(51) Int. Cl.: F16J 15/06, F16L 23/00

(54) **Dichtverbindung**
Sealing joint
Joint d'étanchéité

(30) Priorität: 16.06.1987 DE 3720036
(43) Veröffentlichungstag der Anmeldung: 21.12.1988
(73) Patentinhaber: Hörmansdörfer, Gerd, D-31303 Burgdorf (DE)
(72) Erfinder: Hörmansdörfer, Gerd, D-31303 Burgdorf (DE)

(56) Entgegenhaltungen:
- US-A- 2 922 666
- Feinwerktechnik, Band 68, Nr. 4, 1964, S. 136, Bild 17

## Beschreibung

Die Erfindung betrifft eine Dichtverbindung für die statische Abdichtung von Konstruktionselementen, welche in den unterschiedlichsten Ausführungsformen beispielsweise als Schraubverschluß oder als Flanschdichtung in der Vakuum- bzw. Hochdrucktechnik Anwendung finden kann.

Es sind eine große Anzahl derartiger Dichtverbindungen bekannt, deren Dichtwirkung auf dem Zusammenpressen eines duktilen oder elastischen Dichtrings zwischen den abzudichtenden Bauteilen beruht, wobei der Dichtring aus Gummi, Fiber, Kunststoff oder weichem Metall gefertigt sein kann.

Ganz allgemein lassen sich diese Dichtverbindungen in drei Gruppen einteilen. In der ersten Gruppe werden Flachringe zwischen ebenen Flächen verpreßt. In der zweiten Gruppe werden Flachringe zwischen profilierten Flächen verpreßt, während in der dritten Gruppe in genau umgekehrter Weise profilierte Dichtringe (z.B. Runddrahtringe, Spießkantringe, Kammprofilringe, und dergleichen) zwischen im wesentlichen ebenen Flächen verpreßt werden.

Zur ersten Gruppe gehören z.B. Schraubdichtungen mit Verschlußschrauben nach DIN 908 bzw. DIN 910, Dichtringe nach DIN 7603, und die entsprechenden flanschseitigen Einschraublöcher gemäß DIN 3852. Obwohl diese genormten Schraubdichtungen sehr verbreitet sind, ist ihre Dichtwirkung tatsächlich recht mangelhaft, weshalb sie außerordentlich hohe Anzugsdrehmomente erfordern. Die für die Hochvakuum- bzw. Hochdrucktechnik bestehenden Anforderungen können derartige Schraubdichtungen nicht zuverlässig erfüllen.

Bei den bekannten Dichtverbindungen der zweiten Gruppe besteht ein erhöhter Herstellungsaufwand für Flansch bzw. Verschlußschraube, während sich der zugehörige Flachring relativ preiswert herstellen läßt. Wird nun in einem solchen Fall die Geometrie der Dichtflächen vereinfacht, wie z.B. bei der sogenannten Stufendichtung, so wird gleichzeitig die Dichtwirkung herabgesetzt.

Eine derartige Stufendichtung, welche dem Oberbegriff des Patentanspruchs 1 entspricht, ist aus der US-A-2 922 666 bekannt. Diese Stufendichtung besitzt an beiden Flanschen jeweils eine rechtwinklige Dichtkante, deren jeweils eine Flanke eine stirnseitige Planfläche bildet. Dabei weisen beide Dichtkanten den gleichen Durchmesser auf. Die Funktion dieser Dichtung beruht praktisch ausschließlich auf der Scherung des Dichtrings. Bei gleichem und vor allem bei einem geringfügig größeren Durchmesser der mit ihrer Flanke axial zurückspringenden Dichtkante des Unterflansches gegenüber dem Durchmesser der mit ihrer Stirnfläche vorstehenden Dichtkante des Oberflansches wirken beide Flansche gegenüber dem Dichtring wie eine Lochstanze, so daß mit ausreichender Anzugskraft der Dichtring durchgestanzt wird. Um diesen Effekt zu vermeiden, besitzen die Flansche einen Plananschlag, welcher das axiale Zusammenziehen beider Flansche gegeneinander begrenzt. In der Praxis wird daher der Durchmesser der mit ihrer Flanke zurückspringenden Dichtkante des Unterflansches geringfügig kleiner gehalten als der Durchmesser der mit ihrer Stirnseite vorstehenden Dichtkante des Oberflansches, um diesen Stanzeffekt zu vermeiden.

Bei der Stufendichtung besteht ferner aufgrund der rechtwinkligen und orthogonal zueinander ausgerichteten Dichtkanten der Flansche bei deren Zusammenbewegung während des Anziehens der Dichtverbindung und der dabei auf den Dichtring wirkenden Scherkräfte an den Flanken der in den Dichtring eingeschnittenen Stufen eine ausgeprägte Neigung zur Bildung rissiger Flächen, weil hier das Material aufgrund der linienförmig umlaufenden und extrem schmalbandig angreifenden Kraftspitzen scherend getrennt wird. Nach dem festen Anziehen der Stufendichtung bis zum vorgesehenen Anschlag mit einem unbenutzten Dichtring würde dieser nach dem erstmaligen Gebrauch bei der folgenden Verwendung weder axial noch radial weiter verformt, weshalb er bei jedem Öffnen der Dichtverbindung zwingend ausgetauscht werden muß. Ein rotatives Zusammenziehen der Flansche wäre bei der Stufendichtung aufgrund des in der Scherzone auftretenden Materialfressens nicht zu verwirklichen.

Andererseits sind nun in dieser Gruppe eine Reihe von eingeführten Dichtverbindungen bekannt, welche in der Hochvakuumtechnik als reine Flanschdichtungen eingesetzt werden, z.B. die CONFLAT-Dichtung oder die CAJON-Doppellippendichtung. Diese Dichtverbindungen wären jedoch in den kleineren Durchmesserbereichen unter 30 mm nur unter großen Schwierigkeiten und unter Verwendung extrem kleiner und speziell angeschliffener Stichel spanend herstellbar, und werden daher nur mit größeren Durchmessern angeboten. Es hat sich ferner gezeigt, daß die erwähnte CONFLAT-Dichtung bei dynamischer Temperaturbeanspruchung unter Hochvakuumbedingungen zu Mikroleckagen neigt.

Bei einer anderen zu der zweiten Gruppe gehörenden Dichtverbindung wird ein sehr dünner Flachring zwischen zwei konisch ineinander passenden Flanschen während der Montage tellerfederartig verformt. (Siehe: Feinwerktechnik, Band 68, Nr.4, 1964, Seite 136, Bild 17). Da diese Dichtverbindung keine Dichtkanten besitzt und der Dichtring bei einer derartigen Geometrie vollständig zwischen die Konusflächen der beiden Flansche hineingezogen wird, entspricht der Konuswinkel des verpreßten Dichtrings nach dem Anziehen dem gemeinsamen Konuswinkel der beiden Flanschpartner. Damit ist die spezifische Flächenpressung auf den Dichtring bei der genannten Dichtverbindung relativ klein und über die gesamte Fläche praktisch gleich. Vor allem bei der Verwendung metallischer Werkstoffe für den Dichtring werden hohe Anzugsmomente für die Bolzen der Dichtverbindung erforderlich, um eine halbwegs ausreichende Dichtwirkung zu erzielen. Außerdem können durch die starke Dehnung des Dichtrings Mikrorisse im Gefüge auftreten, so daß z.B. eine Heliumdichtigkeit nicht mehr gewährleistet wäre.

Die Dichtverbindungen der dritten Gruppe haben den Nachteil, daß die Herstellung profilierter Dichtringe aufgrund der Weichheit der zu verwendenden Werkstoffe und der Kleinheit der Geometrien schwierig und teuer ist, wenn die Herstellung spanend erfolgen muß. Ebenso aufwendig ist die Fertigung aus Endlosmaterial (z.B. Runddraht), welches abgelängt und am Stoß durch Schweissen oder Löten verbunden werden muß. Eine stanztechnische Herstellung ist in der Regel nicht zu verwirklichen. Ein weiterer Nachteil dieser Dichtverbindungen ist die zwingende Notwendigkeit, den Dichtring nach einmaligem Gebrauch auszutauschen.

Es bestand daher die Aufgabe zur Schaffung einer Dichtverbindung, welche einerseits die Anforderungen der Hochvakuum- bzw. Hochdrucktechnik bei unterschiedlichen und wechselnden Temperaturen zuverlässig erfüllen konnte, andererseits unkompliziert und preiswert in verschiedenen, auch kleinen Baugrößen möglichst unter Verwendung handelsüblicher Hartmetall-Wendeschneidplatten herstellbar sein sollte. Gleichzeitig war für bestimmte Anwendungen eine mehrfache, mindestens jedoch zweifache Wiederverwendung des Dichtrings gefordert.

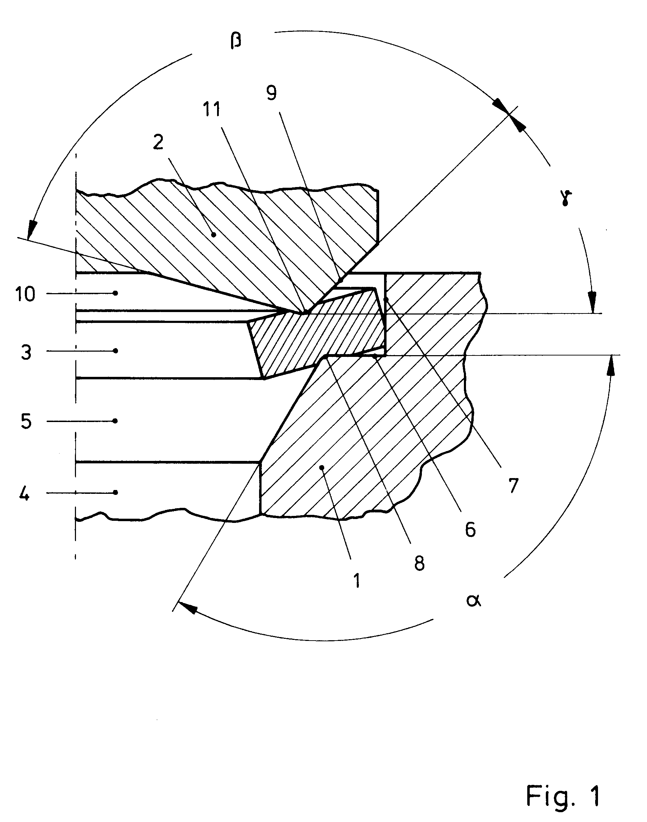

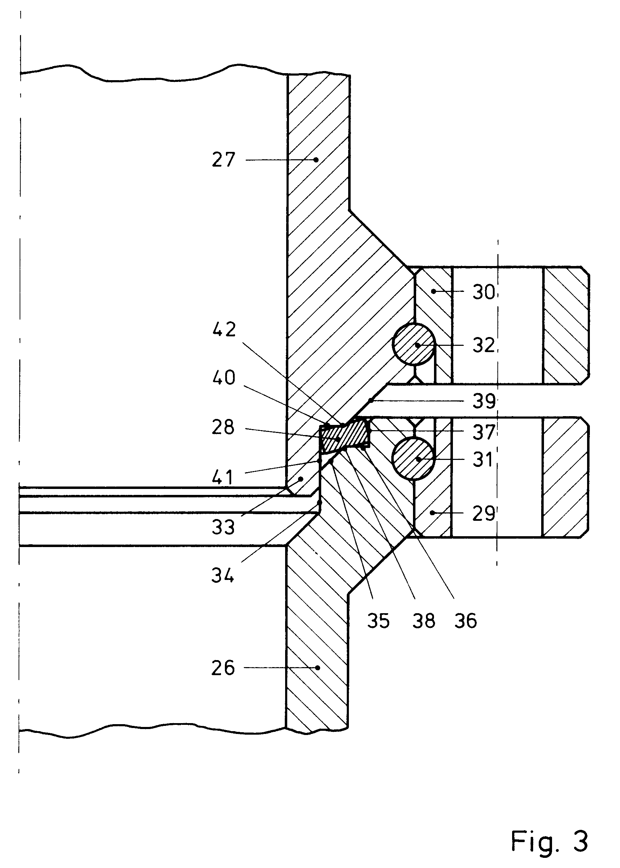

Die beschriebene Aufgabe wird nach der Erfindung unter Verwendung eines Flachrings durch eine spezielle Ausgestaltung der Dichtflächen an den abzudichtenden Bauteilen gelöst. Dabei sind im Prinzip beide Dichtflächen mit je einer Dichtkante (z.B. 8,11, Fig.1) versehen, wobei die Flanken der jeweiligen Dichtkante vorzugsweise einen Winkel (α bzw. β) zwischen etwa 100° und 150° einschließen. An der Dichtfläche des ersten Bauteils (z.B. 1, Fig.1) ist die eine Flanke dieser Dichtkante durch die Planfläche (6) eines im wesentlichen zylindrischen Einstichs, und ihre zweite Flanke durch einen sich anschließenden Konus (5) gebildet. Diese Gestaltung ist außerordentlich einfach herzustellen. Beim einfachen Gegendrücken des flachen Dichtrings (3) gegen diese an der ersten Dichtfläche gebildeten Planfläche (6) wäre allerdings die dortige Dichtkante (8) ohne Wirkung. Der besondere Trick liegt nun darin, durch eine spezielle Ausbildung der Dichtfläche an dem zweiten Teil (2) während des Eingrabens der Dichtkante beim axialen Zusammenpressen beider Dichtflächen den Dichtring tellerfederartig so zu verformen, daß aufgrund dieser erzwungenen Kippbewegung eine Schräglage der rechteckigen Querschnittsfläche des Dichtrings bewirkt wird und sich auch die Dichtkante der Dichtfläche (5,6) des ersten Bauteils (1) in den Dichtring (3) eingraben kann. Der Kippbewegung des Dichtrings wird durch die axialen Anpresskräfte der von beiden Seiten auf den Dichtring wirkenden Dichtflächen eine verdichtende Verformung überlagert. Durch die Kippbewegung und gleichzeitige Verformung des Dichtrings legt sich dieser mit dem unteren Teil seines Umfangs an der Wand (7) des sich an die erste Dichtfläche anschließenden im wesentlichen zylindrischen Einstichs und/oder mit dem oberen Teil seiner Bohrung an die sich an die zweite Dichtfläche (z.B. 39,40, Fig.3) anschließende im wesentlichen zylindrischen Mantelfläche (41) an und zentriert sich auf diese Weise vorteilhaft. Durch seine tellerfederartige Durchbiegung wird gleichzeitig eine Zentrierung der Dichtkante der zweiten Dichtfläche bewirkt, und so ein nachteiliges exzentrisches Einschneiden der Dichtkante verhindert. Die beschriebene Funktion wird dadurch erreicht, daß der Außendurchmesser des Dichtrings im wesentlichen dem Innendurchmesser des zylindrischen Einstichs und/oder der Innendurchmesser des Dichtrings im wesentlichen dem Außendurchmesser der in den Dichtring eintauchenden zylindrischen Mantelfläche entspricht, ferner die zu der zweiten Dichtfläche gehörende äußere Konusfläche (z.B. 9, Fig.1) gegenüber der Planebene um einen Winkel (γ) zwischen etwa 30° und 60° gekippt ist, und gleichzeitig der Durchmesser der Dichtkante (8) der ersten Dichtfläche gegenüber dem Durchmesser der Dichtkante (11) der zweiten Dichtfläche, jeweils gemessen an der am weitesten gegeneinander vorstehenden Kreislinie, geringfügig größer ist, jedoch nicht mehr als der Dicke des Dichtrings entspricht. Durch die einfache Geometrie und die stumpfen Winkel der Dichtflächen, sowie die gekippte Lage der Dichtkante an der zweiten Dichtfläche sind die zu bearbeitenden Zonen gut zugänglich und mit normalen Werkzeugen leicht herstellbar.

Beide Dichtkanten sind an ihrer Spitze mit einem kleinen Radius versehen, damit ein reißendes Eingraben in den Dichtring während des Zusammenpressens der beiden Bauteile vermieden wird. Dies ist vor allem wichtig, wenn eines der beiden Bauteile drehend gegengezogen wird.

Der zu der erfindungsgemäßen Dichtverbindung gehörende Dichtring (z.B. 3, Fig.1) mit rechteckigem Querschnitt ist aus einem nachgiebigen Werkstoff gefertigt (z.B. Gummi, Fiber, Kunststoff, Metall). Vorteilhaft kann der Dichtring aus Kupfer bestehen, welches nach der Herstellung weichgeglüht und entsprechend den Anforderungen zusätzlich galvanisch beschichtet wird (z.B. mit Nickel und/oder Silber). Für den Einsatz in der Vakuumtechnik ist wahlweise vorgesehen, den Dichtring zur Vereinfachung von Helium-Lecktests an der Außen- und/oder Innenfläche mit einer oder mehreren kleinen Aussparungen bzw. Abflachungen (z.B. gemäß Fig.6 bzw. Fig.7) zu versehen. Besonders vorteilhaft ist eine nach weiterer Erfindung vorgesehene triagonale Verformung (Fig.8) des Dichtrings, welche diese Funktion ohne weitere zerspanende Bearbeitung des Dichtrings bewirkt. Diese Ausführungsform hat weiter den Vorteil, daß der Dichtring mit größeren Fertigungstoleranzen, etwa durch Stanzen, hergestellt werden kann und anschließend durch dreiseitiges Drücken kalibrierbar ist.

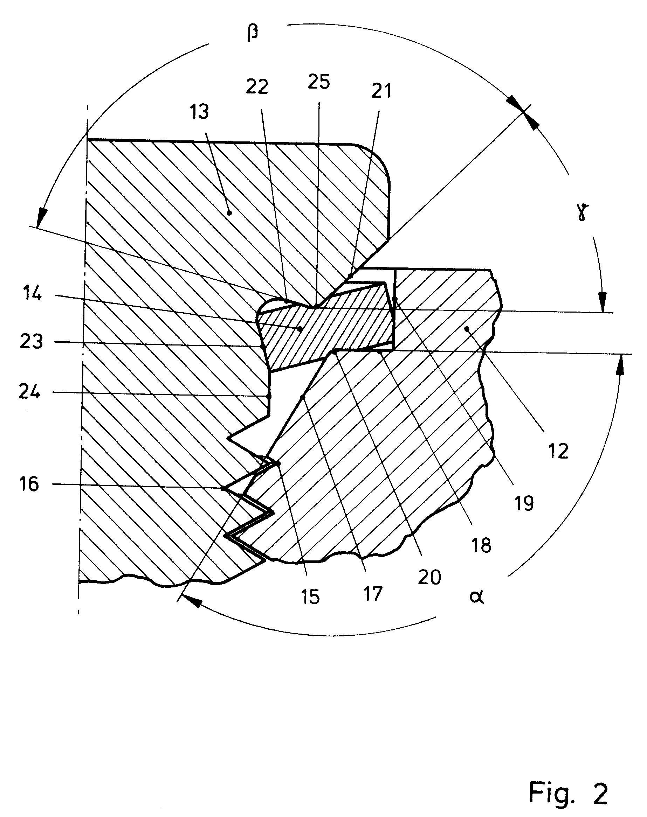

Obwohl es in vielen Bereichen der Technik üblich, bzw. unter Umständen sogar vorgeschrieben ist, nach dem Öffnen einer Dichtverbindung einen neuen Dichtring einzulegen, und diese Vorgehensweise im allgemeinen auch für die erfindungsgemäße Dichtverbindung empfohlen wird, haben entsprechende Versuche gezeigt, daß der Dichtring bei dem erfindungsgemäßen Dichtsystem in der Regel bis zu etwa zehnmal wiederverwendbar ist. Die Wiederverwendung des Dichtrings wird bei speziellen Anwendungsfällen in der Vakuumtechnik gefordert, wenn z.B. ein Rezipient mittels einer Pumpschleuse nachevakuiert werden muß. Es wäre ein großer Nachteil, wenn in einem solchen Falle die Anlage vollständig belüftet werden müßte, nur um den Dichtring zu wechseln. Die erfindungsgemäße Dichtverbindung kann diese Forderung zuverlässig erfüllen. Dabei kann durch das Festlegen der Passungen zwischen den Zylinderflächen des Dichtrings und den entsprechenden sich an die Dichtflächen anschließenden Andruckflächen (z.B.19 bzw. 24, Fig.2) an den beiden Bauteilen bestimmt werden, auf welchem der beiden Bauteile der Dichtring nach dem Lösen der Verbindung festsitzen soll. Da Verschlüsse der betreffenden Art gewöhnlich aus dem System Verschlußschraube/Einschraubloch bestehen, empfiehlt es sich, einen Festsitz des Dichtrings auf dem Zapfen der Verschlußschraube vorzusehen. Dieser wird in weiterer Erfindung zusätzlich dadurch unterstützt, daß im entsprechenden Bereich des Schraubzapfens die dortige Zylinderfläche (24) in Richtung zur Dichtfläche hin geringfügig konisch (23) verjüngt wird. Nach dem ersten Anziehen der Dichtverbindung sitzt der Dichtring aufgrund seiner Verformung unverlierbar auf dem Schraubzapfen fest und kann so ohne die Gefahr des Verlierens wiederverwendet werden. Die erfindungsgemäße Geometrie erlaubt nun eine einfache Demontage des mehrfach benutzten Dichtrings durch Einführen der Verschlußschraube z.B. in einen entsprechend gebohrten Holzklotz und leichtes Schlagen z.B. mit einem Schonhammer auf den Kopf. Dadurch wird die tellerfederartige Durchbiegung des Dichtrings größtenteils aufgehoben, der Dichtring leicht geweitet und gelöst.

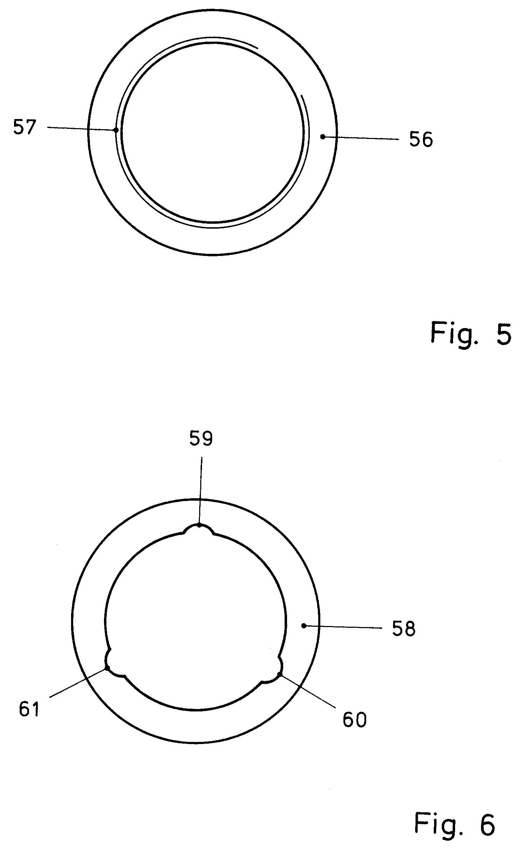

In gleicher Weise erlaubt die erfindungsgemäße Dichtverbindung das Fixieren des Dichtrings an seinem äußeren Umfang. In weiterer erfindungsgemäßer Ausbildung ist der Dichtring entsprechend mit einem Innengewinde (57, Fig.5) versehen, welches das Einschrauben eines Gewindedorns und das Herausziehen des Dichtrings erlaubt.

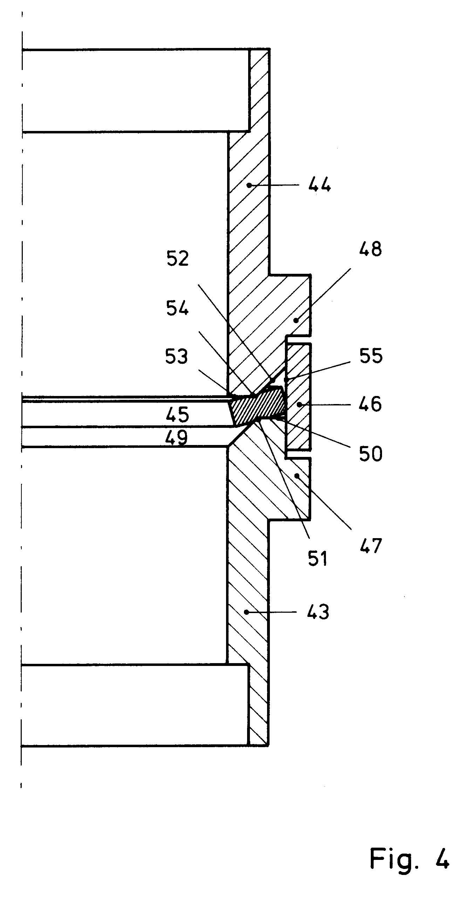

Die Erfindung soll im folgenden anhand der acht Zeichnungsfiguren näher erläutert werden. Für die Zeichnungsfiguren 1 bis 4 wurde eine geschnitten und halbseitig gezeichnete Darstellungsform gewählt. Fig.1 zeigt die Prinzipskizze eines Ausführungsbeispiels der erfindungsgemäßen Dichtverbindung im angepreßten Zustand. Fig.2 stellt eine gegenüber der Fig.1 abgewandelte Ausführungsform dar. Ein drittes Ausführungsbeispiel wird in Fig.3 in Form einer Dichtverbindung für Rohrleitungen gezeigt. In Fig.4 ist eine weitere Variante der Dichtverbindung am Beispiel einer kleineren Rohrleitungsverbindung dargestellt. Die Zeichnungsfiguren 5 bis 8 zeigen anhand von Beispielen verschiedene Ausführungsmöglichkeiten des erfindungsgemäßen Dichtrings.

Fig.1 zeigt die Prinzipskizze der erfindungsgemäßen Dichtverbindung im angepreßten Zustand in einer geschnitten und halbseitig gezeichneten Darstellung, bestehend aus einem ersten Bauteil (1), einem zweiten Bauteil (2) und einem Dichtring (3). Das erste Bauteil (1) besitzt eine zu verschließende Bohrung (4). Stirnseitig ist ein zylindrischer Einstich (6,7) eingedreht, dessen Planfläche (6) an der Dichtkante (8) in einen Konus (5) übergeht, welcher in die Bohrung (4) einmündet. Zwischen Konusfläche (5) und Planfläche (6) ist ein Winkel (α) gebildet, welcher mit 120° dargestellt ist. Die Spitze der dadurch gebildeten Dichtkante (8) ist leicht verrundet. Die Dichtfläche des zweiten Bauteils (2), welches einen Verschlußdeckel darstellen soll, besteht aus zwei Konusflächen (9,10), welche den Winkel (β), dargestellt mit 120°, einschließen. Die äußere Konusfläche (9) ist gegenüber der Planfläche um den Winkel (γ), dargestellt mit 45°, geneigt. Es wird so an der Dichtfläche des zweiten Bauteils eine Dichtkante (11) gebildet, deren Durchmesser im Verhältnis zum Durchmesser der Dichtkante (8) an dem ersten Bauteil, jeweils gemessen an der am weitesten gegeneinander vorstehenden Kreislinie, um einen Betrag kleiner ist, welcher maximal der Dicke des Dichtrings entspricht. Auch am zweiten Bauteil ist die Spitze der Dichtkante (11) verrundet. Der Dichtring (3) mit rechteckigem Querschnitt, dessen Außendurchmesser bei der Montage im wesentlichen dem Innendurchmesser (7) des zylindrischen Einstichs (6,7) am ersten Bauteil entspricht, ist aufgrund der auf ihn mittels der Dichtkanten der beiden Bauteile (1,2) ausgeübten Kräfte tellerfederartig durchgebogen, wobei sich der untere Bereich seines Umfangs an die Zylinderwand (7) des Einstichs (6,7) angepreßt hat. Gleichzeitig haben sich zu beiden Seiten die Dichtkanten (8,11) der beiden Bauteile (1,2) eingegraben und eine verdichtende Verformung des Dichtrings (3) bewirkt.

Fig.2 zeigt in einer abgewandelten und ebenfalls halbseitig und geschnitten gezeichneten Version einen Flansch (12) mit einer Verschlußschraube (13) und einem Dichtring (14). Der normalerweise in einer solchen Verschlußschraube vorhandene Innensechskant wurde zur Vereinfachung weggelassen. Die dargestellten Winkelverhältnisse der Dichtflächen entsprechen in ihrer Dimensionierung der Fig.1, wobei am Flansch (12) die Konusfläche (17) und die Planfläche (18) die Dichtkante (20) bilden, während die Zylinderfläche (19) als äußere Anlagefläche für den Dichtring dient. An der Verschlußschraube (13) ist die Dichtkante (25) an der Scheitellinie der beiden Konusflächen (21,22) gebildet. Sowohl Flansch (12) als auch Verschlußschraube (13) sind mit einem Gewinde (15, 16) versehen. Die am Schraubzapfen der Verschlußschraube (13) zwischen Gewindeauslauf und Dichtfläche vorhandene im wesentlichen zylindrische Mantelfläche (24) ist zur Dichtfläche hin leicht konisch (23) verjüngt, um ein Festsetzen des Dichtrings nach dem ersten Anziehen der Verschlußschraube zu bewirken.

Fig.3 zeigt in der gleichen Darstellungsform an einem Ausführungsbeispiel eine erfindungsgemäße Flanschabdichtung einer Rohrleitung mittleren Durchmessers. Der Unterflansch (26) besitzt einen zylindrischen Einstich (36,37), welcher an der Dichtkante (38) in einen Konus (35) übergeht. Zusätzlich ist der Unterflansch mit einer zylindrischen Aufweitung (34) versehen, welche der Zentrierung des Oberflansches (27) dient. Der Oberflansch (27) besitzt eine Dichtfläche, deren Dichtkante (42) aus einem außenliegenden Konus (39) und einer sich anschließenden Planfläche (40) gebildet ist. Der Oberflansch (27) ist ferner mit einer kragenförmigen Verlängerung (33) versehen, welche die Zentrierung im Unterflansch bewirkt und gleichzeitig als innere Anlagefläche (41) für den Dichtring (28) dient. In beide Flansche ist je eine Ringnut eingestochen, in welche je ein Sprengring (31,32) eingelegt ist, der jeweils als Anlagefläche für den Überwurfflansch (29,30) dient.

Fig.4 zeigt eine eine vergrößert und wiederum halbseitig geschnitten dargestellte Rohrleitungsverbindung kleinen Durchmessers mit den erfindungsgemäßen Merkmalen. Unterflansch (43) und Oberflansch (44) sind so konstruiert, daß sie auf die dicht zu verbindenden Rohrenden gelötet werden können. Die für das Zusammenpressen der Flanschverbindung vorgesehene Druckschraube und die entsprechende Überwurfmutter sind nicht eingezeichnet. Am Unterflansch ist die Dichtkante (51) der Dichtfläche durch eine Planfläche (50) und eine innenliegende Konusfläche (49) gebildet. Die äußere Anlagefläche (55) für den Dichtring (45) besteht aus einer getrennt aufgeschobenen Hülse (46). Dadurch ist die Dichtfläche für eine unter Umständen erforderliche Läppbearbeitung gut zugänglich. Gleichzeitig dient die Hülse (46) aufgrund ihrer Länge der Zentrierung der beiden Flansche. Der Oberflansch (44) ist mit einer Zylinderfläche versehen, die in die Hülse (46) eintaucht. Es schließt sich die aus äußerer Konus- (52) und innerer Planfläche (53) gebildete Dichtfläche mit der Dichtkante (54) an. An beiden Flanschen ist je ein Kragen (47,48) als Andruckfläche für die Druckschraube, bzw. die Überwurfmutter angebracht.

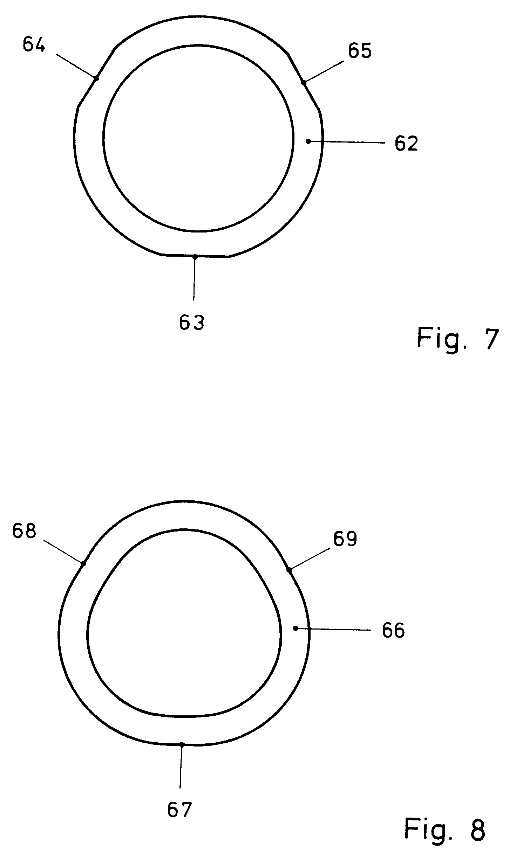

In den Zeichnungsfiguren 5 bis 8 sind verschiedene erfindungsgemäße Ausführungen des Dichtrings an Beispielen dargestellt. Fig.5 zeigt einen Dichtring (56) mit Innengewinde (57), welches das Einschrauben eines Dorns erlaubt. Fig.6 stellt einen Dichtring (58) mit inneren Aussparungen (59,60,61) dar, welche die Durchführung von Helium-Lecktests erleichtern. Dem gleichen Zweck dienen die Abflachungen (63,64,65) des in Fig.7 gezeigten Ausführungsbeispiels eines Dichtrings (62). Besonders vorteilhaft ist die erfindungsgemäße Bauform mit triagonaler Verformung (67,68, 69) des Dichtrings (66) gemäß Fig.8, weil diese durch einen einfachen Biegevorgang herstellbar ist. Gleichzeitig lassen sich derartige Dichtringe auf diese Weise sehr einfach im Innen- und Außendurchmesser kalibrieren.

Die erfindungsgemäße Dichtverbindung zeichnet sich aufgrund ihrer Merkmale durch eine herausragende Dichtigkeit aus, welche bereits bei sehr kleinen Anpresskräften zuverlässig gewährleistet ist. Ihr Einsatzspektrum erstreckt sich vom Ultrahochvakuum- bis zum Hochdruckbereich, wobei gleichzeitig bei Verwendung entsprechender Werkstoffe eine sehr hohe Temperaturfestigkeit zu erreichen ist. Es können in vorteilhafter Weise entweder handelsübliche oder geringfügig modifizierte Flachringe verwendet werden. Die Geometrien der Dichtflächen sind ausgesprochen unkompliziert und mit handelüblichen Hartmetall-Wendeschneidplatten sehr preiswert herstellbar. Mit der Erfindung wird somit ein Dichtsystem zur Verfügung gestellt, welches eine technische Verbesserung bei gleichzeitiger Reduzierung der Herstellungskosten bietet.

## Patentansprüche

1. Dichtverbindung zweier Bauteile (1,2) mit rotationssymmetrischen, koaxial zueinander angeordneten und je eine Dichtkante (8,11) aufweisenden Dichtflächen, wobei zwischen den Dichtflächen ein im unverformten Zustand flacher und im Querschnitt im wesentlichen rechteckiger Dichtring (3) aus verformbarem Werkstoff angeordnet ist, der zwischen den Dichtflächen zentriert ist, dadurch gekennzeichnet,
daß die erste der Dichtflächen am ersten Bauteil (1) aus einer konischen Innenfläche (5) besteht, die an einer Dichtkante (8) in eine gegenüber der konischen Innenfläche (5) nach außen weg verlaufende Stirnfläche (6) übergeht,
wobei die zweite Dichtfläche am zweiten Bauteil (2) aus einer konischen Außenfläche (9) besteht, die an einer Dichtkante (11) in eine gegenüber der konischen Außenfläche (9) nach innen weg verlaufende Stirnfläche (10) übergeht,
wobei die Dichtkante (8) an der ersten Dichtfläche mit ihrer gegenüber der zweiten Dichtfläche axial am weitesten vorstehenden Kreislinie im Durchmesser größer ist als der entsprechende Durchmesser der Dichtkante (11) der zweiten Dichtfläche und
wobei die Differenz der Durchmesser der Dichtkanten (8,11) höchstens so groß ist wie die Dicke des Dichtrings (3),
wobei dieser Dichtring (3) dadurch zentriert ist, daß an der ersten Dichtfläche im Anschluß an die nach außen weg verlaufende Stirnfläche (6) eine axial vorstehende im wesentlichen zylindrische Innenfläche (7) und/oder in der zweiten Dichtfläche (z.B. gemäß Fig.2) im Anschluß an die nach innen weg verlaufende Stirnfläche (22) eine axial vorstehende im wesentlichen zylindrische Außenfläche (24) vorhanden sind, deren Durchmesser im wesentlichen dem Außendurchmesser bzw. dem Innendurchmesser des Dichtrings (3, bzw. 14) entsprechen.

2. Dichtverbindung nach Anspruch 1, dadurch gekennzeichnet, daß die Differenz der Durchmesser der Dichtkanten, gemessen an den jeweils am weitesten axial gegeneinander vorstehenden Kreislinien höchstens halb so groß ist wie die Dicke des Dichtrings (3).

3. Dichtverbindung nach Ansprüchen 1 oder 2, dadurch gekennzeichnet, daß sowohl der Winkel (α) zwischen der konischen Innenfläche (5) der ersten Dichtfläche und der zugehörigen nach außen weg verlaufenden Stirnfläche (6), als auch der Winkel (β) zwischen der konischen Außenfläche (9) der zweiten Dichtfläche und der zugehörigen, nach innen weg verlaufenden Stirnfläche (10) ungefähr 100° bis 150°, vorzugsweise ungefähr 120° betragen, wobei die Stirnfläche (6) der ersten Dichtfläche im wesentlichen radial verläuft, bzw. der Seitenwinkel (γ) der konischen Außenfläche (9) der zweiten Dichtfläche ungefähr 25° bis 65°, vorzugsweise ungefähr 45° beträgt.

4. Dichtverbindung nach Ansprüchen 1 bis 3, dadurch gekennzeichnet, daß die nach innen weg verlaufende Stirnfläche (10) gegenüber der ersten Dichtfläche axial weg zurückspringt und gegenüber dem Winkel der konischen Außenfläche einen negativen Konuswinkel hat, wobei der Seitenwinkel dieses negativen Konuswinkels, gemessen gegen die Radialebene, ungefähr 0° bis 30°, vorzugsweise ungefähr 10° bis 15° beträgt.

5. Dichtverbindung nach Ansprüchen 1 bis 4, dadurch gekennzeichnet, daß die Dichtkanten abgerundet sind, vorzugsweise mit einem Radius zwischen 0,1 und 1 mm.

6. Dichtverbindung gemäß einem oder mehreren der vorstehenden Ansprüche, dadurch gekennzeichnet, daß die im wesentlichen zylindrische Innenfläche (7) bzw. Außenfläche (24, Fig.2) axial zu der zugehörigen Dichtkante hin einen etwas größeren bzw. kleineren Durchmesser (z.B. 23, Fig.2) haben als entfernt davon.

7. Dichtverbindung gemäß einem oder mehreren der vorgenannten Ansprüche, dadurch gekennzeichnet, daß die sich an die erste Dichtfläche anschließende zylindrische Innenfläche (7), bzw. die sich an die zweite Dichtfläche anschließende zylindrische Mantelfläche (z.B. 41, Fig.3) durch eine separat aufsteckbare Hülse (z.B. 46, Fig.4) gebildet ist.

8. Dichtverbindung gemäß einem oder mehreren der vorgenannten Ansprüche, dadurch gekennzeichnet, daß der Dichtring (56, Fig.5) ein Innengewinde (57) aufweist.

9. Dichtverbindung gemäß einem oder mehreren der vorgenannten Ansprüche, dadurch gekennzeichnet, daß der Dichtring (58, Fig.6, bzw. 62, Fig.7) an seinem inneren oder äußeren Rand Ausnehmungen (z.B. 59,60,61) oder Abflachungen (z.B.63,64,65) aufweist.

10. Dichtverbindung gemäß einem oder mehreren der vorgenannten Ansprüche, dadurch gekennzeichnet, daß der Dichtring (66, Fig.8) in der Kreisebene triagonal (67,68,69) verformt ist.

## Claims

1. Sealing joint between two mechanical members (1, 2) with sealing surfaces which are rotationally symmetric and arranged coaxially to each other, each of which having one sealing edge (8, 11); between the sealing surfaces is an annular gasket (3) made of ductile material, flat when not deformed, with a basically rectangular cross-section, centered between the sealing surfaces, characterised by the fact:
that the first sealing surface on the first member (1) consists of a conical inner surface (5), which at a sealing edge (8) changes into a face (6) extending outwards away from the conical inner surface (5),
whereby the second sealing surface on the second member (2) consists of an outer conical surface (9), which at a sealing edge (11) changes into a face (10) extending inwards away from the conical outer surface (9),
whereby the diameter of the sealing edge (8) on the first sealing surface is larger on its circumference which extends furthest axially against the second sealing surface than the corresponding diameter of the sealing edge (11) on the second sealing surface,
whereby the difference in the diameters of the sealing edges (8, 11) is at most as large as the thickness of the gasket (3),
whereby the gasket (3) is centered by the fact that on the first sealing surface joining the face (6) extending outwards away there is an axially extending basically cylindrical inner surface (7) and/or on the second sealing surface (e.g. per fig.2) joining the the surface (22) extending inwards there is an axially extending basically cylindrical outer surface (24), said cylindrical inner and outer surfaces having diameters basically corresponding to the outer respectively inner diameter of the gasket (3 and 14 respectively.

2. Sealing joint per claim 1, characterised by the fact that the difference in the diameters of the sealing edges, each measured on the circumferences axially extending most against each other, is maximally half the thickness of the gasket (3).

3. Sealing joint per claims 1 or 2, characterised by the fact that both the angle (α) between the conical inner surface (5) of the first sealing surface and the associated face (6) extending outwards, and the angle (β) between the conical outer surface (9) of the second sealing surface and the associated face (10) extending inwards are approximately 100° to 150°, preferably around 120°, whereby the face (6) of the first sealing surface basically runs in a radial direction, respectively the side angle (γ) on the conical outer surface (9) of the second sealing surface is approximately 25° to 65°, preferably around 45°.

4. Sealing joint per claims 1 to 3, characterised by the fact that the face (10) extending inwards, moves back axially from the first sealing surface and has a negative cone angle compared to the angle of the conical outer surface, whereby the side angle of this negative cone angle, measured against the radial plane, is approximately 0° to 30°, preferably around 10° to 15°.

5. Sealing joint per claims 1 to 4, characterised by the fact that the sealing edges are rounded, preferably with a radius of 0,1 to 1 mm.

6. Sealing joint per one or more of the above claims, characterised by the fact that the basically cylindrical inner surface (7), respectively outer surface (24, fig.2) in an axial position to the associated sealing edge has a slightly larger respectively smaller diameter (e.g. 23, fig.2) than further away from it.

7. Sealing joint per one or more of the above claims, characterised by the fact that the cylindrical inner surface (7) joining the first sealing surface, respectively the cylindrical outer surface (e.g. 41, fig.3) joining the second sealing surface is formed by a separatlely attachable sleeve (e.g. 46, fig.4).

8. Sealing joint per one or more of the above claims, characterised by the fact that the annular gasket (56, fig.5) has an internal thread (57).

9. Sealing joint per one or more of the above claims, characterised by the fact that the annular gasket (58, fig.6 and 62, fig.7) has, on its inner or outer border, grooved (e.g. 59, 60, 61) or flattened (e.g. 63, 64, 65) areas.

10. Sealing joint per one or more of the above claims, characterised by the fact that the annular gasket (66, fig.8) is subject to triangular distortion (67, 68, 69) in the circular plane.

## Revendications

1. Joint d'étanchéité entre deux éléments mécaniques (1, 2) avec surfaces d'étanchéité à symétrie de révolution, placées sur le même axe, chacune présentant un bord d'étanchéité (8, 11); entre les surfaces d'étanchéité se trouve une garniture annulaire (3) faite de matériau ductile, plate lorsqu'elle n'est pas déformée, dont la section transversale est en principe rectangulaire, centrée entre les surfaces d'étanchéité, caractérisé par le fait:
que la première surface d'étanchéité sur le premier élément (1) se compose d'une surface conique interne (5) qui, au niveau d'un bord d'étanchéité (8), devient une face (6) se prolongeant vers l'extérieur, en s'éloignant de la surface conique interne (5),
et que la deuxième surface d'étanchéité sur le deuxième élément (2) se compose d'une surface conique externe (9) qui, au niveau d'un bord d'étanchéité (11), se transforme en une face (10) se prolongeant vers l'intérieur, en s'éloignant de la surface conique externe (9),
et que le diamètre du bord d'étanchéité (8) sur la première surface d'étanchéité est plus grand dans sa circonférence la plus saillante en direction axiale vers la deuxième surface d'étanchéité que le diamètre correspondant du bord d'étanchéité (11) de la deuxième surface d'étanchéité,
et que la différence entre les diamètres des bords d'étanchéité (8, 11) est au plus aussi grande que l'épaisseur de la garniture (3),
et que cette garniture (3) est centrée par le fait que, sur la première surface d'étanchéité reliée à la face (6) se prolongeant vers l'extérieur, il y a une surface interne (7) en principe cylindrique qui s'étend en direction axiale, et/ou sur la deuxième surface d'étanchéité (exemple fig.2) reliée à la surface (22) se prolongeant vers l'intérieur, il y a une surface externe en principe cylindrique qui s'étend en direction axiale; les diamètres de ces surfaces internes et externes correspondant en principe aux diamètres externes et internes de la garniture (3 et 14 respectivement).

2. Joint d'étanchéité selon revendication 1, caractérisé par le fait que la différence entre les diamètres des bords d'étanchéité, chacun mesuré à la circonférence la plus saillante en direction axiale vers l'autre, s'élève au plus à la moitié de l'épaisseur de la garniture (3).

3. Joint d'étanchéité selon revendications 1 ou 2, caractérisé par le fait que l'angle (α) entre la surface conique interne (5) de la première surface d'étanchéité et la face correspondante (6) se prolongeant vers l'extérieur ainsi que l'angle (β) entre la surface conique externe (9) de la deuxième surface d'étanchéité et la face correspondante (10) se prolongeant vers l'intérieur, sont compris entre 100° et 150°, de préférence aux environs de 120° ; et que la face (6) de la première surface d'étanchéité prend en principe une direction radiale, ou que l'angle adjacent (γ) de la surface conique externe (9) de la deuxième surface d'étanchéité est compris entre environ 25° et 65°, de préférence aux environs de 45°.

4. Joint d'étanchéité selon revendications 1 à 3, caractérisé par le fait que la face (10) se prolongeant vers l'intérieur recule en direction axiale par rapport à la première surface d'étanchéité et fait un angle de cône négatif par rapport à l'angle de la surface conique externe ; et que l'angle adjacent à cet angle de cône négatif, mesuré par rapport au plan radial, est compris entre environ 0° et 30°, de préférence aux environs de 10° à 15°.

5. Joint d'étanchéité selon revendications 1 à 4, caractérisé par le fait que les bords d'étanchéité sont arrondis avec un rayon compris de préférence entre 0,1 et 1 mm.

6. Joint d'étanchéité selon une ou plusieurs revendications ci-dessus, caractérisé par le fait que la surface interne en principe cylindrique (7) ou la surface externe (24, fig.2), en direction axiale par rapport au bord d'étanchéité correspondant, a un diamètre légèrement plus grand ou plus petit (exemple 23, fig. 2) que les parties plus éloignées.

7. Joint d'étanchéité selon une ou plusieurs revendications ci-dessus, caractérisé par le fait que la surface interne cylindrique (7) reliée à la première surface d'étanchéité ou à la surface externe cylindrique (exemple 41, fig.3) est formée par un manchon monté séparément (exemple 46, fig.4).

8. Joint d'étanchéité selon une ou plusieurs revendications ci-dessus, caractérisé par le fait que la garniture annulaire (56, fig.5) est munie d'un filet interne (57).

9. Joint d'étanchéité selon une ou plusieurs revendications ci-dessus, caractérisé par le fait que la garniture annulaire (58, fig.6 et 62, fig.7) présente sur le bord interne ou sur le bord externe des zones rainurées (exemples 59, 60, 61) ou aplaties (exemples 63, 64, 65).

10. Joint d'étanchéité selon une ou plusieurs revendications ci-dessus, caractérisé par le fait que la garniture annulaire (66, fig.8) est soumise à une déformation triangulaire (67, 68, 69) sur son plan circulaire.
